# EUROPEAN PATENT SPECIFICATION

(11) **EP 3 096 614 B1**
(45) Date of publication and mention of the grant of the patent: **08.09.2021**
(21) Application number: 15701151.1
(22) Date of filing: 19.01.2015
(51) Int. Cl.: A01N 1/02, F25B 21/02

(54) **METHOD AND APPARATUS FOR PRESERVING BIOLOGICAL MATERIAL**
VERFAHREN UND VORRICHTUNG ZUR KONSERVIERUNG VON BIOLOGISCHEM MATERIAL
PROCÉDÉ ET APPAREIL DE CONSERVATION DU MATÉRIEL BIOLOGIQUE

(30) Priority: 20.01.2014 EP 14151839
(43) Date of publication of application: 30.11.2016
(73) Proprietor: MAG SOAR SL, 28341 Valdemoro (ES)
(72) Inventor: PÉREZ DÍAZ, José Luis, E-28341 Valdemoro (Madrid) (ES); ÁLVAREZ VALENZUELA, Marco, E-28341 Valdemoro (Madrid) (ES); SÁNCHEZ-GARCÍA CASARRUBIOS, Juan, E-28341 Valdemoro (Madrid) (ES)
(74) Representative: Lorente Berges, Ana
(86) International application number: PCT/EP2015/050883
(87) International publication number: WO 2015/107190

(56) References cited:
- EP-A2- 0 136 030
- WO-A1-2009/006693
- WO-A1-2010/076886
- CN-B- 101 451 783
- JP-A- 2008 215 716
- US-A1- 2011 277 487

## Description

### FIELD OF THE INVENTION

The present application is directed to a method that allows supercooling water, water solutions, animal and vegetal tissues and organs and other liquids without freezing them. That is, cooling the liquid at a temperature below that of its nominal freezing-melting point, without freezing. The invention also includes an apparatus for performing such supercooling and further methods where supercooling without formation of crystals is advantageous.

### BACKGROUND

Controlling freezing of water is of general interest for science with many technical applications strongly affecting our lives. In spite the fact bulk water can be supercooled down to temperatures well below 0°C before it homogeneously freezes, inhomogeneous freezing of water is triggered on the surface at much higher temperatures (Hindmarsh, J., Russell, A. & Chen, X. Experimental and numerical analysis of the temperature transition of a suspended freezing water droplet.... J. Heat Mass Transf. 46, 1199-1213 (2003)).

The use of cooling for preservation of organic materials, food and perishable goods is a well-known technique. It is known that the lower the temperature is, the longer the time the product can be stored without a significant damage. The limit for cooling down fresh produces is just freezing. Ice crystals break the cellular structure, denaturalize and spoil the product. Most of the refrigerated chambers for fresh produces are designed to be above 0°C typically between 4 and 5°C, to safely prevent occasional freezing.

Controlling surface crystallization of liquids, e.g. water, is of key importance and can lead to applications in many fields such as preservation of organic material, chemical catalysis or aerospace.

Document EP0136030 discloses the preservation of a material containing water by dispersion in an oil medium and under-cooling the dispersion, preferably to a temperature in the range of -20°C to -40°C, where the oil medium lacks a surfactant which can catalyse ice formation.

Document US2011/0277487 discloses a supercooling system which can supply heat to a stored object or generate heat according to a sensed temperature to maintain the stored object in a supercooled state.

Document CN101451783 discloses an electric refrigerator comprising an air cooling system, as well as a super-cooling fresh-keeping chamber connected with the air cooling system through an induced duct and a backwind tube, and further comprises a cooling chamber and a refrigeration chamber; wherein the super-cooling fresh-keeping chamber is arranged under the cooling chamber and on the refrigeration chamber and comprises an internal chamber and external chamber with certain space therebetween.

### BRIEF DESCRIPTION OF THE FIGURES

Fig. 1: Temperature of freezing (melting point or freezing point) of a 2.8 mm diameter deionized water droplet vs. relative humidity in still air.
Fig. 2: Sequence of images of water droplets freezing at different temperature and relative humidity conditions.

### BRIEF DESCRIPTION OF THE INVENTION

Contrary to current scientific understanding we have experimentally shown that freezing nucleated on the surface of a water droplet is strongly depressed by dryness in air.

Thus, a first aspect of the invention is a method for preserving biological material comprising water, the water being also in the presence of a gas phase, the method comprising: establishing a relationship between the concentration of water in the vapor phase and the freezing point of the water by means of a plot; cooling the biological material comprising water, the gas phase or a combination thereof, wherein the water, the gas phase or the combination thereof is cooled to a temperature below 0°C at atmospheric pressure; and reducing the concentration of the water in the gas phase according to the plot in order to prevent freezing of the water and thus of the biological material comprising water.

So far it has been commonly assumed that dryness in air enhances evaporation on the surface, cooling the surface and making freezing more likely to occur at higher temperatures. See for example Satoh, I., Fushinobu, K. & Hashimoto, Y. Freezing of a water droplet due to evaporation- heat transfer dominating the evaporation-freezing phenomena and the effect of boiling on freezing characteristics. Int. J. efrig. 25, 226-234 (2002). The present invention provides proof that it is the opposite which is true, opening the door of new applications.

A further aspect of the invention is an apparatus for carrying out the method of the first aspect, the apparatus comprising: a chamber adapted to receive biological material comprising water; means for cooling the biological material comprising water, the gas phase or a combination thereof, wherein the water, the gas phase or the combination thereof is cooled to a temperature below 0°C at atmospheric pressure; and means for controlling the concentration of the water in the gas phase according to a plot, where the plot establishes a relationship between the concentration of water in the vapor phase and the freezing point of the water, in order to prevent freezing of the water and thus of the biological material comprising water.

### DETAILED DESCRIPTION OF THE INVENTION

### Definitions

Relative Humidity in a vapor phase is the ratio of the partial pressure of water vapor to the equilibrium vapor pressure of water at the same temperature. Also in the present invention humidity may be used to refer to the concentration in the vapor phase of substances other than water.

Cooling is understood as decreasing the temperature of the environment, whether of the liquid, of a material comprising said liquid (e.g. biological material comprising water), the vapor phase present in the system or a combination of the foregoing.

Freezing point is defined herein as the actual point on the temperature-humidity diagram for which a liquid turns into solid, e.g. where water turns into ice.

Nominal freezing point is the maximum temperature at which the liquid freezes. It is always that at which the solid phase melts at atmospheric pressure. In the case of water at atmospheric pressure it is 0°C (close to the triple point of water).

To supercool a liquid is to cool that liquid down to a temperature below the nominal freezing point of such a liquid without a substantial formation of solid crystals.

Gas phase is understood as the gaseous phase in contact with the liquid. Said gas phase can be limited to pure vapor of one or several substances present in the liquid (e.g. water) or in the material comprising said liquid, or it can be a more complex mixture with further components, such as those found in air (e.g. nitrogen, oxygen, CO, C02).

### The method of the invention

Besides shedding light on a number of water-related phenomena such as the Mpemba effect (Mpemba, E B y Osborne, D. G. cool? Phys. Educ. 14, 410 - 413 (1979)), the present invention opens new perspectives in many technical fields, especially in reference to water.

Water has always attracted a great interest due to its omnipresence and importance in human activity but also to the number of its anomalies like the existence of High density and Low density "structures" of supercooled liquid water. But, if bulk liquids have a number of counterintuitive, exciting and decisive properties; their surface seems to be a prodigious source of surprises and presents distinct characteristic properties different from those of bulk materials (Perez-Diaz, J. & Mufioz, M. Spinpolarized electrons at interfaces: Co/Cu systems. Phys. Rev. B 50, 8824-8831 (1994)).

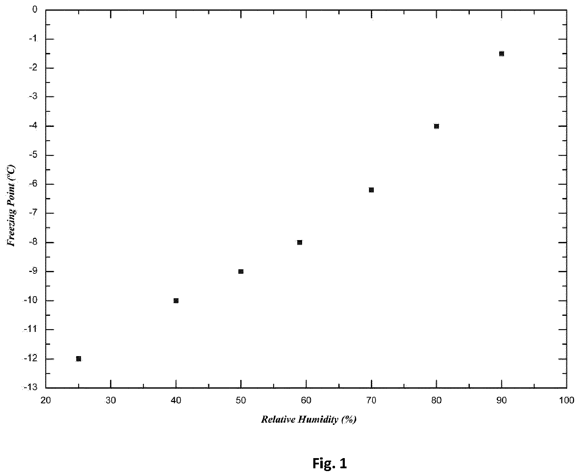

We have found that when cooling down a liquid comprising a substance (or the pure liquid substance, e.g. water) in the presence of a gas phase partially containing vapor of the substance, surprisingly the temperature at which the liquid substance starts to develop crystals, and thus starts to solidify or freeze, depends on the concentration of said substance in the vapor phase. The lower the concentration of vapor of the substance in the gas phase, the lower the temperature at which crystallization is triggered. In the case of water, this means that in still air at constant relative humidity conditions we have found that the lower relative humidity is, the lower the temperature at which it freezes (fig. 1). Thus, we could say that dryness "prevents" freezing of water. This result is the opposite of current scientific belief.

This is very useful to design methods and apparatus capable of performing controlled supercooling (cooling the liquid substance at temperatures below those corresponding to the nominal freezing point at a given pressure without observing freezing), or of freezing liquid substances, by modifying the relative concentration of the substance in the gas phase with which the liquid substance is in contact, without changing other variables, such as temperature. That is, freezing or preventing freezing of the liquid substance by only changing the concentration of said substance in the gas phase, while maintaining all other variables constant, including pressure and temperature. Once the relation between the concentration of vapor of substance in the gas phase and the freezing point of the liquid substance comprising said component is stablished, one can supercool the liquid substance without freezing or induce freezing by changing the concentration of vapor of the substance in the gas phase. Such relationship is plotted by measuring the freezing point of the liquid substance at different concentrations of the substance in the gas phase (see fig. 1). First, the chamber is kept at a temperature above the nominal freezing point and at a selected humidity. The sample, for example a liquid substance pending droplet is then provided. It quickly reaches a thermal equilibrium with the air in the chamber. Then, cooling means, for example Peltier coolers, are used to slowly cool down the air in the chamber. Humidity is kept constant by using dehumidification means. A camera can be used to watch the state of the sample. For example if the sample is illuminated from the back, the transmitted light drastically changes when freezing is triggered as there is a sudden change in the refraction index.

Alternatively the sample can be supercooled at low humidity as described above, but before reaching the freezing point, humidity can be increased up to the point at which freezing is triggered. Both methods provide essentially the same set of points in the Temperature- humidity diagram. So, for constant temperature and pressure, for example, as it can be seen in fig. 1, at -8° C a water droplet remains liquid whenever humidity is lower than 60%. It freezes when humidity is higher than that. We can thus control at a given temperature and pressure whether a liquid substance freezes.

Thus, in the present invention, preventing freezing of the water and thus of the biological material comprising water is possible, once the relationship between the concentration of a substance in the vapor phase and the freezing point of the liquid comprising said substance is established, by means of a plot as explained above.

A method useful to freeze a liquid substance under controlled conditions not forming part of the invention is further disclosed hereby, said liquid substance being in the presence of a vapor phase, comprising the steps of (i) cooling the liquid substance, the vapor phase or a combination thereof, down to a temperature below the nominal freezing point and controlling the amount of the substance present in the vapor phase thereby preventing freezing of the liquid substance; (ii) raising the amount of the substance present in the vapor phase thereby inducing freezing of the liquid substance.

The present invention thus provides for the first time the use of means to control the amount of a substance present in a vapor phase to modulate freezing of a supercooled liquid comprising said substance, which is in the presence of said vapor phase. This is especially useful in the case of water, where desiccating or humidifying means (or both) can be used for modulating freezing of biological material.

An application of the above supercooling method is found in the preservation of biological material. Such biological material can be a microorganism, a cell culture, organic tissue, natural or synthetic, or an organ or an organism or part of it. The method includes a step in which the biological material is cooled to a temperature while controlling relative humidity so as to prevent freezing of the biological material. This allows cooling below 0° C without frost. The biological material can thus be preserved for much longer times, as the rate of the reactions, metabolism and microbial activity which cause decay decreases exponentially with temperature.

According to a preferred embodiment, said material is biological material, including organisms and parts thereof, for example, one selected from the group consisting of a microorganism, a cell culture, organic tissue, natural or synthetic, and organs. Said biological material can also include food and brewages, such as vegetables, meat, fish, fruit, juices, drinks and mixtures thereof, or other vegetables such as flowers.

According to the invention, the material comprises water, and it is cooled to a cooling temperature below 0° C at atmospheric pressure. Said temperature is preferably comprised between -20° C and 0° C, preferably between -15° C and 0° C. When freezing is to be prevented, the concentration of water in the vapor phase is typically kept below 50%, preferably between 0% and 50%, more preferably between 5% and 40%, more preferably between 7% and 30%, even more preferably between 10 and 30%.

### The apparatus of the Invention

For example, in the case of an organ, preservation can be extended from a few hours to days, significantly improving current technology. It is thus a further aspect of the invention an apparatus for modulating freezing of a liquid substance, said liquid substance being in the presence of a gas phase, the apparatus comprising a chamber adapted to receive said liquid substance, means for controlling the temperature of the liquid substance, of the vapor phase or a combination thereof, and means for controlling the amount of the substance present in the vapor phase. Such an apparatus is used to preserve biological material, preferably and organ, more preferably a heart.

Means to control temperature and pressure are used and are known to the skilled person. Any of them are useful to the present invention as long as they allow suitable control. Means used to control temperature include, for example, Peltier devices. Such means must be capable of bringing temperatures down to supercooling temperatures, for example, in the case of water, below 0° C.

Such apparatus can be configured to supercool other biological samples, for example, one selected from the group consisting of a microorganism, a cell culture, organic tissue, natural or synthetic organs, and food and brewages, such as vegetables, meat, fish, fruit, juices, drinks and mixtures thereof, or other vegetables such as flowers. The apparatus of the invention can thus have any size and shape without limitation. Thus, according to an embodiment of the invention, the apparatus comprises a chamber to receive the organ (e.g. heart) and means for controlling the temperature of the heart, of the vapor phase (mainly water) or of both, and means for controlling humidity in the vapor phase.

### Examples

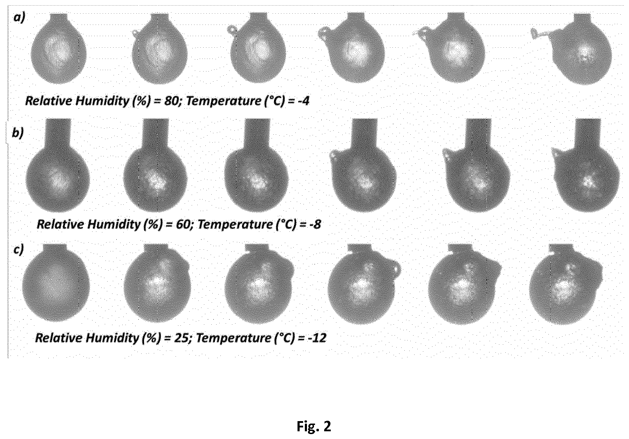

We designed and built an isothermal chamber where it is possible to keep a liquid droplet at a fixed temperature and a fixed humidity for the air at atmospheric pressure. This chamber was made of aluminum and provided with Peltier devices with their cold face cooling down the walls of the chamber. Moreover, it was thermally isolated and was provided with two optical windows for illumination and observation. We used a camera to sequence the freezing process in different conditions of humidity. First, freezing of the surface occurs, preventing light from the back to reach the camera. The freezing frontwave progression all along the surface of the droplet is faster than the time between frames (15 ms). Once the surface is frozen it makes up a sort of rigid shell still containing liquid supercooled water in it. Then the progression of the freezing frontwave inwards compresses the liquid water which eventually breaks out through the weakest point of the shell. This generates protruding icicles as can be seen in Fig. 2. The size and shape of these protruding icicles strongly depends on the humidity of air as it can be seen in Fig. 2. For low humidity, the freezing temperature is also low and there are only protruding deformations. For medium humidity the protuberances become conic and even present a final point. Finally, for high humidity, the freezing temperature approaches 0°C and icicles protrude forming stable cylindrical shells in which liquid water is contained and flows to the tip where they grow. This way of growing requires the existence of a liquid tip and a simultaneous axial progression of the freezing wavefront all around the cylinder.

## Claims

1. A method for preserving biological material comprising water, the water being also in the presence of a gas phase, the method comprising:
establishing a relationship between the concentration of water in the vapor phase and the freezing point of the water by means of a plot;
cooling the biological material comprising water, the gas phase or a combination thereof, wherein the water, the gas phase or the combination thereof is cooled to a temperature below 0°C at atmospheric pressure; and
reducing the concentration of the water in the gas phase according to the plot in order to prevent freezing of the water and thus of the biological material comprising water.

2. The method according to claim 1, further comprising the additional step of heating the water and/or the vapor phase and controlling the concentration of the water in the vapor phase thereby preventing freezing of the liquid substance.

3. The method according to any of the previous claims, wherein the ratio between temperature and concentration of vapor of the water in the gas phase is kept within a pre-determined relationship thereby preventing freezing of the water.

4. The method according to any of the previous claims, wherein the cooling temperature is comprised between -20°C and 0°C.

5. The method according to any of the previous claims, wherein the concentration of water in the vapor phase is kept below 50%.

6. The method according to any of the previous claims, wherein said biological material is selected from the group consisting of: an organism, preferably a microorganism or a cell culture, organic tissue, natural or synthetic, organs, groups of organs, and systems.

7. An apparatus for carrying out the method of claim 1, the apparatus comprising:
a chamber adapted to receive biological material comprising water, the water being in the presence of a gas phase,
means for cooling the biological material comprising water, the gas phase or a combination thereof, wherein the water, the gas phase or the combination thereof is cooled to a temperature below 0°C at atmospheric pressure, and
means for controlling the concentration of the water in the gas phase according to a plot, where the plot establishes a relationship between the concentration of water in the vapor phase and the freezing point of the water, in order to prevent freezing of the water and thus of the biological material comprising water.

8. The apparatus according to claim 7, wherein the biological material is selected from the group consisting of an organism, preferably a microorganism or a cell culture, organic tissue, natural or synthetic, organs, groups of organs, and systems.

9. The apparatus according to claim 8, wherein the biological material is a heart.

## Patentansprüche

1. Verfahren zur Erhaltung von biologischem Material, das aus Wasser besteht, wobei das Wasser ebenfalls eine Gasphase aufweist, und das Verfahren besteht, aus:
Herstellung einer Beziehung zwischen der Wasserkonzentration in der Dampfphase und dem Gefrierpunkt des Wassers mittels eines Diagramms;
Kühlung des biologischen Materials aus Wasser, Gasphase oder einer Kombination davon, wobei das Wasser, die Gasphase oder die Kombination davon auf eine Temperatur unter 0 °C bei atmosphärischem Druck abgekühlt wird, und
die Konzentration des Wassers in der Gas Phase entsprechend dem Diagramm reduziert wird, um das Einfrieren des Wassers und damit des biologischen Materials aus Wasser zu verhindern.

2. Das Verfahren nach Anspruch 1 umfasst ferner den zusätzlichen Schritt der Erwärmung des Wassers und/oder der Dampfphase und die Kontrolle der Wasserkonzentration in der Dampfphase, wodurch das Gefrieren der flüssigen Substanz verhindert wird.

3. Das Verfahren nach einem der vorherigen Ansprüche, bei dem das Verhältnis zwischen Temperatur und Wasserdampfkonzentration in der Gasphase in einem vorbestimmten Verhältnis gehalten wird, wodurch das Gefrieren des Wassers verhindert wird.

4. Das Verfahren nach den vorherigen Ansprüchen, bei dem die Kühltemperatur zwischen -20 °C und 0 °C liegt.

5. Das Verfahren nach einem der vorherigen Ansprüche, bei dem die Wasserkonzentration in der Dampfphase unter 50 % gehalten wird.

6. Das Verfahren nach einem der vorherigen Ansprüche, bei dem das biologische Material aus der Gruppe ausgewählt wird, die aus einem Organismus, vorzugsweise einem Mikroorganismus oder einer Zellkultur, organischem Gewebe, natürlichen oder synthetischen Organen, Organgruppen und Systemen besteht.

7. Eine Vorrichtung zur Durchführung des Verfahrens aus Anspruch 1,
die Vorrichtung, bestehend aus:
einer Kammer, die dafür ausgerichtet ist, biologisches Material aus Wasser aufzunehmen, wobei sich das Wasser in einer Gasphase befindet,
Mittel zur Kühlung des biologischen Materials aus Wasser, Gasphase oder einer Kombination davon, wobei das Wasser, die Gasphase oder die Kombination davon auf eine Temperatur unter 0 °C bei atmosphärischem Druck abgekühlt wird, und
Mittel zur Kontrolle der Konzentration des Wassers in der Gasphase anhand eines Diagramms, wobei das Diagramm einen Zusammenhang zwischen der Wasserkonzentration in der Dampfphase und dem Gefrierpunkt des Wassers herstellt, um das Einfrieren des Wassers und damit des biologischen Materials, das Wasser enthält, zu verhindern.

8. Die Vorrichtung nach Anspruch 7, bei der das biologische Material aus der Gruppe ausgewählt wird, die aus einem Organismus, vorzugsweise einem Mikroorganismus oder einer Zellkultur, organischem Gewebe, natürlichen oder synthetischen Organen, Organgruppen und Systemen besteht.

9. Vorrichtung nach Anspruch 8, bei der das biologische Material ein Herz ist.

## Revendications

1. Une méthode de conservation du matériel biologique comprenant de l'eau, l'eau étant également en présence d'une phase gazeuse, la méthode consistant à :
établir une relation entre la concentration d'eau en phase vapeur et le point de congélation de l'eau au moyen d'une représentation graphique ;
refroidir le matériau biologique comprenant l'eau, la phase gazeuse ou une combinaison de ces éléments, où l'eau, la phase gazeuse ou la combinaison de ces éléments est refroidie à une température inférieure à 0° C à la pression atmosphérique ; et réduire
la concentration de l'eau dans la phase gazeuse en fonction de la représentation graphique afin d'éviter la congélation de l'eau et donc du matériau biologique comprenant de l'eau.

2. La méthode selon la revendication 1 comprenant en outre l'étape supplémentaire de chauffage de l'eau et/ou de la phase de vapeur et le contrôle de la concentration de l'eau dans la phase de vapeur pour empêcher ainsi la congélation de la substance liquide.

3. La méthode selon l'une quelconque des revendications précédentes, dans laquelle le rapport entre la température et la concentration de vapeur de l'eau dans la phase gazeuse est maintenu dans une relation prédéterminée, pour ainsi empêcher la congélation de l'eau.

4. La méthode selon l'une quelconque des revendications précédentes, dans laquelle la température de refroidissement est comprise entre -20° C et 0° C.

5. La méthode selon l'une quelconque des revendications précédentes, dans laquelle la concentration d'eau en phase vapeur est maintenue en dessous de 50 %.

6. La méthode selon l'une quelconque des revendications précédentes, dans laquelle ledit matériel biologique est sélectionné parmi le groupe composé de : un organisme, de préférence un microorganisme ou une culture cellulaire, un tissu organique, naturel ou synthétique, des organes, des groupes d'organes et des systèmes.

7. Un appareil pour la mise en œuvre du mode de revendication 1, l'appareil comprenant :
une chambre adaptée pour recevoir du matériel biologique comprenant de l'eau, l'eau étant en présence d'une phase gazeuse,
un moyen permettant de refroidir le matériau biologique comprenant l'eau, la phase gazeuse ou une combinaison de ces éléments, où l'eau, la phase gazeuse ou la combinaison de ces éléments est refroidie à une température inférieure à 0° C à la pression atmosphérique, et
un moyen permettant de contrôler la concentration de l'eau dans la phase gazeuse selon une représentation graphique, où ladite représentation graphique établit une relation entre la concentration d'eau dans la phase vapeur et le point de congélation de l'eau, afin d'empêcher la congélation de l'eau et donc du matériel biologique comprenant l'eau.

8. L'appareil selon la revendication 7, dans lequel le matériel biologique est sélectionné parmi le groupe composé d'un organisme, de préférence un microorganisme ou une culture cellulaire, un tissu organique, naturel ou synthétique, des organes, des groupes d'organes et des systèmes.

9. L'appareil selon la revendication 8, où le matériel biologique est un cœur.
